# EUROPEAN PATENT SPECIFICATION

(11) **EP 2 900 841 B1**
(45) Date of publication and mention of the grant of the patent: **19.02.2020**
(21) Application number: 13762791.5
(22) Date of filing: 11.09.2013
(51) Int. Cl.: C22C 47/00, C22C 47/06, B21C 37/04, B23P 17/06

(54) **MASS OF METAL FIBERS AND NONWOVEN WEB MADE THEREOF AND USE**
METALLFASERMASSE UND DAVON HERGESTELLT VLIESBAHN SOWIE DEREN NUTZUNG
MASSE DE FIBRES DE MÉTAL ET TOILE NON TISSÉE FABRIQUÉE DE CELLE CI ET SON USAGE

(30) Priority: 27.09.2012 EP 12186398
(43) Date of publication of application: 05.08.2015
(73) Proprietor: NV Bekaert SA, 8550 Zwevegem (BE)
(72) Inventor: VERSCHAEVE, Frank, B-8553 Otegem (BE); VERMEULEN, Steve, B-8980 Beselare (BE)
(74) Representative: Zhang, Li
(86) International application number: PCT/EP2013/068781
(87) International publication number: WO 2014/048738

(56) References cited:
- EP-A1- 0 030 606
- EP-A1- 0 292 651
- EP-A2- 0 319 959
- WO-A1-2006/078189
- US-A- 4 409 659

## Description

### Technical Field

The invention relates to a mass of metal fibers. The mass of metal fibers of the invention can be made in a small weight and the metal fibers in the mass have a low variation in equivalent diameter between fibers. Additionally, the invention describes a method to make such a mass of fibers. Such a mass of metal fibers can e.g. be used for making nonwoven webs which can be used in a variety of applications, e.g. in filtration, in electrodes of fuel cells and electrolysers, in catalysts...

### Background Art

Several production processes are known to make metal fibers (e.g. stainless steel fibers) in the diameter range below 100 µm. Examples are bundle drawing (as e.g. disclosed in US-A-2050298, US-A-3277564 and in US-A-3394213), shaving (as disclosed in US-A-4930199), machining (as e.g. disclosed in EP0030606 and EP0292651) and fibers extracted or extruded from the melt (as e.g. disclosed in US-B1-6410878, DE10000097 and US 5524704). Exemplary application of such fibers is in nonwoven webs for a variety of applications, e.g. for filtration purposes.

Bundle drawn fibers have a hexagonal cross section. They have a low between fiber variation in equivalent diameter (which is the diameter of a circle with the same area as the cross sectional area of the fibers). Bundle drawing however is a long process, in multiple steps, and not suited to make small volumes or small amounts of fibers. Furthermore, not all metals nor all metal alloys can be processed into fibers via bundle drawing.

The production of shaved fibers requires the availability of a metal foil of the appropriate thickness, which is an expensive preparation step for the material and not suitable if a small amount of metal fibers need to be made in a short time frame. Not all metals or metal alloys can be provided as foil. The fibers have a substantially rectangular cross section and have a low variation in equivalent diameter between fibers.

Fibers from the melt mostly have a kidney shaped cross section. Such fibers require expensive production equipment. With an installation, the kinds of metals that can be produced into fibers are limited. Diameter ranges are limited, as finer fibers cannot be made (or with huge difficulties). The technology is not suited for making a small amount of metal fibers, given the large investment and the complex process. A same production equipment cannot be used for a wide range of metals or metal alloys.

Machined fibers have an irregularly shaped cross section. The process involves cutting fibers from a metal work piece by means of a tool, e.g. on a turning lathe. The technology allows that a small weight of metal fibers can be produced in a fast way, without a lot of preparation. A large range of metals can be processed into fibers. However, metal fibers produced this way have a large variation in equivalent diameter. This is a disadvantage, e.g. when fine fiber webs with excellent homogeneity have to be produced. Typical applications of machined fiber technology is in steel wool, where coarse fibers are produced and large variation between fibers is accepted.

Machining of work pieces is well known technology to give the work piece the desired shape using a cutting tool, e.g. using lathes. In cutting, chips are removed from the work piece. The chips are mostly continuous in length and have a cross sectional size of several millimetres. US 4409659 describes a vibrating cutting tool in a machining operation on a lathe to provide a work piece with the desired shape of the highest quality and with minimal energy consumption during cutting.

It is a disadvantage of the prior art that it is not possible to make in an economical and fast way small amounts of metal fibers (e.g. a few hundred grams or even a few kilograms) that have a low variation in equivalent diameter between the fibers.

### Disclosure of Invention

It is a first objective of the invention to be able to provide small amounts (e.g. a few hundred grams) of metal fibers of discrete length that have a low variation in equivalent diameter between the fibers.

It is of interest to have small amounts of fibers of discrete length available that have a low variation in equivalent diameter between fibers. It is of interest e.g. when making product developments (e.g. prototypes of new nonwoven webs), or when having to provide fibers from expensive metals (e.g. Ag, Au, Pd...) which are only required in small quantities.

It is a second objective of the invention to provide a nonwoven web that comprises metal fibers of discrete length that have a low variation between fibers of the equivalent diameter of the metal fibers.

According to the first aspect of the invention a mass of metal fibers is provided. With a mass of fibers is meant an unspecified amount of fibers, preferably comprising however an amount of more than 1000 fibers. The metal fibers of that mass
- have a discrete length. With discrete length is meant that the fibers are not filaments, with filament is meant a fiber with a virtually infinite length. Preferably the average length of the metal fibers is below 40 mm, preferably below 30 mm, even more preferably below 20 mm and yet even more preferably below 10 mm or even below 5 mm, even below 3 mm. Preferably the average length of the metal fibers is more than 0.5 mm, preferably more than 5 mm. With average length is meant the arithmetic average length.
- have a cross section - meant is the cross section perpendicular to the length direction of the fiber - that has two neighboring straight lined sides (with neighboring straight lines is meant that the two straight lined sides come together in a point) with an included angle of less than 90° and one or more irregularly shaped curved sides;
- have an average equivalent diameter of the fibers of less than 100 µm;
- have a standard deviation between fibers of the equivalent fiber diameter of less than 25%, more preferably less than 20%, even more preferably less than 18%, even more preferably less than 15%, even more preferably less than 10%, of the equivalent fiber diameter.

It is a benefit of the first aspect of the invention that a small fiber mass can be provided in an economical way of fibers that have a small variation in fiber diameter. The fibers can e.g. be used to make fiber webs (nonwoven webs) with more homogeneous properties, e.g. with homogeneous filtration properties than with similar fibers of the prior art.

Surprisingly, the mass of metal fibers according to the first aspect of the invention showed to have a number of additional benefits:
- the irregularly shaped cross section of the metal fibers showed to give more cohesion in an unsintered metal fiber web made from the mass of metal fibers; and
- sintering of a nonwoven web made with such a mass of metal fibers could be performed faster compared to nonwoven webs made from bundle drawn or from shaved fibers or from fibers made from the melt.

The mass of metal fibers of the invention can e.g. be provided as fibers in a bale, as fibers in a sliver, as fibers in a bag, or in a sintered or unsintered web.

The metal fibers can be tapered along the length of the fiber, meaning that the cross sectional area of the fiber is continuously decreasing from one end to the other end of the fiber.

The fibers do not have a hexagonal cross section as is the case in bundle drawing.

A preferred method of production of the fibers of the mass of fibers of the first aspect of the invention is via machining.

In embodiments of the first aspect of the invention, the average equivalent diameter of the fibers is less than 65 µm, e.g. less than 50 µm, e.g. less than 25 µm; e.g. less than 20 µm. The average equivalent diameter can e.g. be more than 5 µm, e.g. more than 12 µm, e.g. more than 15 µm. Prior art methods to produce machined metal fibers with such diameters for use in fine nonwoven webs were not successful, due to the excessive variation - between fibers - of the equivalent diameter of the metal fibers. The equivalent diameter of a fiber is the diameter of a circle with the same area as the cross sectional area of the fibers.

In an embodiment, the average of the multiplication of the equivalent diameter with the ratio of the circumference of the cross section to the cross sectional area of the metal fibers is lower than 6, preferably less than 5.2. It is a benefit of this embodiment of the invention that a mass of fibers is obtained that has fibers that have a close to round cross sectional shape. This is of benefit as for a number of applications fibers with round (or close to round) cross sectional shape are preferred.

In an embodiment, the ratio of the average of the maximum bisector to the average of the minimum bisector of the metal fibers is smaller than 2.5, preferably smaller than 2. With bisector is meant the length of a straight line inside the fiber cross section that is dividing the cross section in two sections with equal surface area. The maximum bisector is the largest bisector that can be drawn in a cross section, the minimum bisector is the smallest bisector that can be drawn in a cross section.

It is a benefit of this embodiment of the invention that a mass of fibers is obtained that has fibers that have a close to round cross sectional shape. This is of benefit as for a number of applications fibers with round (or close to round) cross sectional shape are preferred.

In an embodiment of the invention, at least 80% of the fibers (meaning percentage by amount of the fibers) of the mass of fibers have a ratio of the maximum bisector to the minimum bisector of less than 2. It is a benefit of this embodiment of the invention that a mass of fibers is obtained that has a large percentage of fibers that have a close to round cross sectional shape. This is of benefit as for a number of applications uniform fibers with round (or close to round) cross sectional shape are preferred.

In embodiments of the invention, the metal fibers are out of a ferrous alloy. In alternative embodiments, the metal fibers are out of a non-ferrous metal or metal alloy.

Examples of metal fibers according to the invention are:
- ferrous metals or alloys e.g. stainless steel (e.g. AISI types such as 310L, 316L, 304, 430, 300-series, 400-series), Fe Cr Alloys (e.g. according to DIN 1.4767); Fe₃Al; Duplex steel types such as 1.4432, 1.4162, 1.4364, or 1.4410 (according to DIN standards), Super Duplex steel types; Nicrofer, Inconel 601, Inconel HR.
- non-ferrous metal, such as titanium, nickel, platinum, aluminium, copper, chromium, gold, silver, niobium, palladium, cerium, erbium, praseodymium, lithium, manganese, molybdenum, rhenium, rhodium, ruthenium, tantalum, vanadium, zirconium, iridium... and non-ferrous alloys, e.g. alloys having a majority in weight percentage of the listed metals. An example of such an alloy is e.g. brass.
It is an additional benefit that metals and alloys that cannot be processed into wires and/or into fibers via the bundle drawing process can be processed into fibers with low variation in equivalent diameter between fibers.

According to a second aspect of the invention a nonwoven web is provided comprising at least one layer of a mass of metal fibers as described in the first aspect of the invention.

According to the invention, it is possible to provide small weights of metal fibers (and for a broad range of different metals) in a fast way, and to make small amounts of nonwoven webs that have homogeneous properties over their surface (e.g. homogeneous filtration properties) without having left over fibers (or only with a minimum of left over fibers). It is also possible to make lighter webs that have homogeneous properties. For instance, nonwoven webs can be provided - made out of a mass of fibers as in the first aspect of the invention - with a weight per unit of area of less than 1000 gram per square meter, preferably less than 200 gram per square meter, e.g. less than 100 gram per square meter, e.g. less than 50 gram per square meter. Such nonwoven webs can be used as a nonwoven web as such or as a layer in a multilayer construction, e.g. in a multilayer construction comprising a number of metal fiber webs and/or meshes and/or screens.

The nonwoven web can e.g. be a carded web, an air laid web or a wet laid web. The nonwoven web can be a web comprising different layers, one or more of which are made out of metal fibers as in the first aspect of the invention.

Multilayer nonwoven webs can be made, e.g. with layers of different fibers (e.g. of different equivalent fiber diameter). One or more layers can be made from masses of fibers as in the first aspect of the invention. It is also possible to make nonwoven webs that entirely consist out of one or more layers made from masses of fibers as in the first aspect of the invention.

The nonwoven webs according to the second aspect of the invention can e.g. be sintered webs or un-sintered webs, or can be webs in which the metal fibers are bonded to each other by means of welding, e.g. by means of impulse welding, e.g. by means of capacitive discharge welding.

A method is provided to manufacture a mass of metal fibers, as in the first aspect of the invention. The method comprises the steps of
- fixing on a lathe a metal piece (or work piece), for instance an ingot, from which the metal fibers will be cut;
- mounting a tool on a tool holder and sliding the tool holder with a feed rate along the axis of the lathe;
- imposing a vibration upon the tool thereby cutting metal fibers from the metal piece;
- measuring the rotational speed of the lathe and using the measurement signal in order to dynamically synchronize (preferably steer and synchronize) the vibration frequency of the tool with the rotational speed of the lathe by means of an electronic control circuit.

The vibration of the tool can be obtained by means of a piezomotor, the frequency of which is controlled.

A lathe can be used - which is readily available and inexpensive technology - to produce metal fibers - of a large variety of metals or metal alloys - that have a low standard deviation between fibers of the equivalent fiber diameter. Fibers of low standard deviation between fibers of the equivalent diameter can be produced.

Fibers of discrete length can be produced by exiting the cutting tool each vibration cycle out of the tool. This way of working has the benefit that fibers with low variation in length can be produced.

A ball bearing, and preferably a pre-tensioned ball bearing, can be used to slide the tool holder along the axis of the lathe. This feature further ensures low variation between fibers of the equivalent diameter of the fibers.

The sliding of the tool holder along the axis of the lathe can be realized by means of a direct drive by means of a linear motor, meaning that no reduction of motor speed nor clutch is required. Such a method contributes to the production of metal fibers with low variation.

The tool holder set up and/or tool mounting can be such that displacement of the tool due to bending of the tool holder during fiber cutting is less than 5 µm, preferably less than 2 µm. This feature improves the uniformity of the equivalent diameter of the fibers that are cut.

The tool holder and/or the tool can be supported in order to minimize or prevent bending of the tool holder due to the cutting forces.

The tool holder and/or the tool can be supported by a mechanical support, preferably the mechanical support is connected to the block onto which the tool holder is mounted. The tool and/or the tool holder can e.g. vibrate in a bush. This way, it is possible to obtain metal fibers according to the first aspect of the invention with even lower variation between fibers of the equivalent fiber diameter.

According to a third aspect of the invention, the use is claimed of nonwoven webs as described in the second aspect of the invention for filtration, as electrodes (e.g. in electrolysers or in fuel cells) or in catalysts (e.g. a nonwoven web as support or carrier for catalysts or the fibers in the nonwoven web can themselves act as catalysts); or as contact layer and/or gas diffusion layer in electrochemical cells (such as in electrolysers or fuel cells). It is a benefit that prototype electrodes and catalysts can be made in a more cost effective way, also for prototypes and for small volumes, and which are homogeneous in properties. It is a further benefit that thinner or finer fiber layers can be provided in the products that still have good homogeneity.

In filtration, the nonwoven webs of the invention have improved gel shearing properties thanks to the surface characteristics of the fibers of the first aspect of the invention.

When used as catalyst or as support or carrier of catalysts the nonwoven webs of the fourth aspect of the invention are showing increased catalytic properties, thanks to the surface characteristics of the fibers as in the first aspect of the invention.

According to a fourth aspect of the invention, products are claimed that comprise nonwoven webs as described in the second aspect of the invention. Examples of such products are filters, electrodes (e.g. in electrolysers or in fuel cells) or catalysts (where in the catalyst a nonwoven web according to the second aspect of the invention is provided as support or carrier for catalysts or the fibers in the nonwoven web according to the second aspect of the invention can themselves act as catalysts) or contact layers and/or gas diffusion layer in electrochemical cell (such as electrolysers or fuel cells).

Lathes are provided comprising the parts to perform the methods of the third aspect of the invention; and/or to make the fibers of the first aspect of the invention. Such features are described in the embodiments of the third aspects of the invention as well as in the modes for carrying out the invention.

A lathe is provided for producing a mass of metal fibers as in the first aspect of the invention, comprising
- means for fixing a metal piece (or work piece), for instance an ingot, on the lathe from which metal fibers can be cut;
- a tool mounted in a tool holder, wherein the tool holder is mounted on or provided in a block;
- means for sliding the block with a feed rate along the axis of the lathe;
- a piezomotor for obtaining the vibration of the tool whereby metal fibers can be cut from the metal piece;
- and means for measuring the rotational speed of the lathe and for using the measurement signal in order to dynamically synchronize (preferably steer and synchronize) the piezomotor and the vibration frequency of the tool with the rotational speed of the lathe by means of an electronic control circuit.

Preferably, the means for imposing a vibration upon the tool allow that the cutting tool exits each cycle of the vibration out of the tool. This way, fibers of discrete length can be produced with low variation in length.

The lathe can comprise a ball bearing, and preferably a pre-tensioned ball bearing, for sliding the block along the axis of the lathe. The features ensure low variation between fibers of the equivalent diameter of the fibers.

The lathe can comprise a direct drive, preferably by means of a linear motor (whereby preferably no reduction of motor speed nor clutch is required) for sliding the block along the axis of the lathe. The features contribute to the production of metal fibers with low variation.

The tool holder set up and/or tool mounting can be such that displacement of the tool due to bending of the tool holder during fiber cutting is less than 5 µm, preferably less than 2 µm. This feature improves the uniformity of the equivalent diameter of the fibers that are cut.

The tip of the tool or the tool holder can be supported in order to minimize or prevent bending of the tool holder due to the cutting forces.

A mechanical support, preferably connected to the block, can be provided for supporting the tool or the tool holder when the lathe is in use cutting fibers. E.g. a bush can be provided by which the tool can vibrate when the lathe is in use cutting fibers. This way, it is possible to obtain metal fibers according to the first aspect of the invention with even lower variation between fibers of the equivalent fiber diameter.

Combinations of features from different embodiments, different aspects of the invention and from different examples are allowed and fall within the scope of the invention.

### Brief Description of Figures in the Drawings

Figures 1 to 8 show examples of fiber cross sections of metal fibers taken out of masses of fibers as in the first aspect of the invention.
Figure 9 show exemplary set up for the fiber machining.

### Mode(s) for Carrying Out the Invention

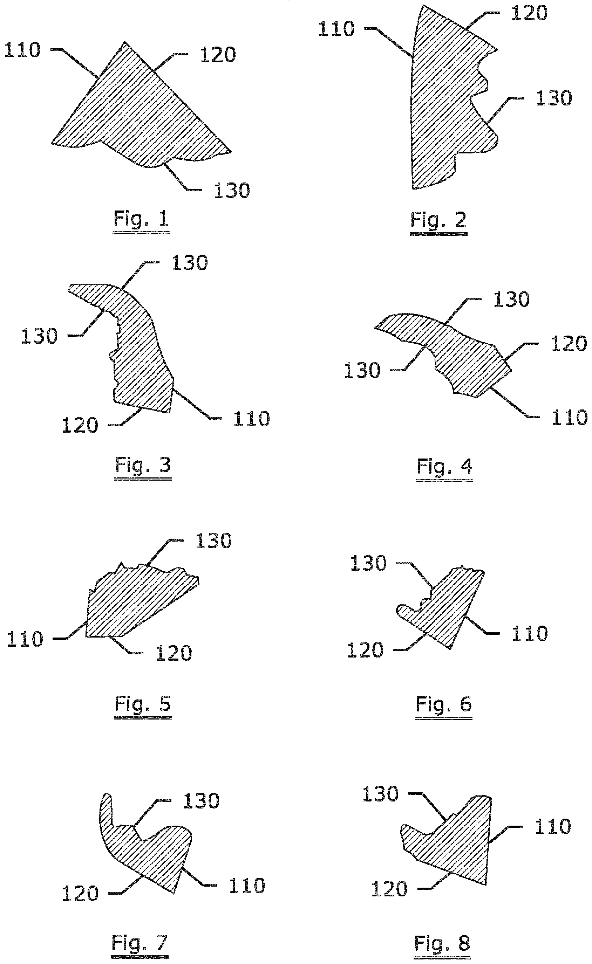

Figures 1 to 8 show examples of fiber cross sections of metal fibers taken out of masses of fibers as in the first aspect of the invention. The fiber cross sections have two neighboring straight lined sides 110, 120 with an included angle of less than 90° and one or more irregularly shaped curved sides 130.

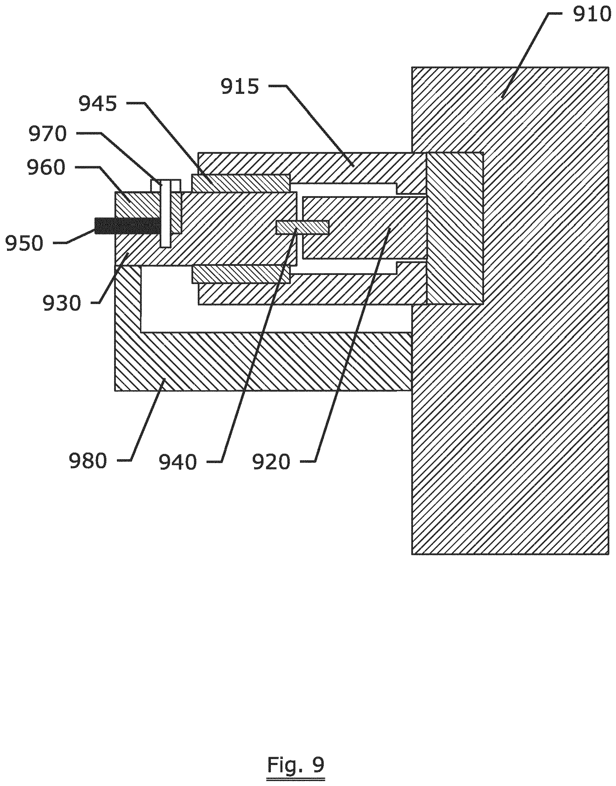

Figure 9 shows a cross section of an exemplary set up for the fiber cutting. A block 910 is provided. Block 910 will slide with a constant speed along the axis of the lathe (not shown in the figure). The sliding movement can be provided via a pre-tensioned ball bearing.

A housing 915 is fixed to the block 910. The housing 915 comprises a piezomotor 920. The vibration frequency of a few thousand Hertz is synchronized via electronic means (using an appropriate controller) with the revolving speed of the lathe, via measurement of the revolving speed of the lathe. A tool holder 930 is connected via a connection 940 to the piezomotor, hence the tool holder 930 will vibrate in the bush 945 thanks to the action of the piezomotor. A chisel (cutting tool) 950 is fixed by means of a clamp 960 and a bolt 970 onto tool holder 930. A supporting piece 980 which is fixed to the block 910 is supporting the tip of the chisel 950 as it is supporting the tool holder 930 under the position of the tip of the chisel 950.

The dimensions of the cross section of the metal fibers can be determined via image analysis. To this end, a bundle of fibers is stretched to align the fibers in the bundle. The fiber bundle is embedded in a resin. A cut is made which is ground and polished. Digital images are taken of the cut fibers and analysed via computerised image analysis techniques, in which the different parameters such as equivalent diameter, maximum and minimum bisector, circumference of the fiber cross section and the surface area of the fiber cross section are determined. Subsequently, averages can be calculated and further statistical analysis can be performed. With averages is meant the arithmetic average being the sum of values of a data set divided by the number of values.

As such, the cross sections are taken at a random position along the length of the fiber. It means that the average results of cross sectional properties between fibers are also averages of the cross sectional dimensions over the length of the fibers.

Fiber masses according to the first aspect of the invention have been made out of brass, FeCrAlloy (fibers according to DIN 1.4767), nickel and stainless steel AISI 304. The mass of fibers has been made via fixation of a metal piece (and more specifically an ingot) on a lathe. The fibers have been cut out of the ingot. A cutting tool has been mounted on a tool holder. The tool holder was sliding with a constant feed rate along the axis of the lathe while the lathe was turning. By means of a piezomotor, a high speed vibration is imposed on the cutting tool. The vibration ensured the cutting of the metal fibers from the ingot. An essential feature to obtain the low variation between fibers of the equivalent diameter of the fibers is the synchronisation of the revolving speed of the lathe with the vibration frequency of the cutting tool. To this end, the revolving speed of the lathe is measured and the measurement signal is used to control and synchronize the vibration frequency of the piezomotor, and hence of the tool. An electronic control circuit is used to this end. For even lower variation of the fiber diameter, a pre-tensioned ball bearing has been used to move the tool holder along the axis of the lathe during fiber production. In producing the masses of fibers illustrated in table I for even lower variation in fiber diameter, the tip of the tool is supported. This support is vertically under the tip of the tool, in order to prevent the tip of the tool to bend downwards under the cutting forces. The tool was supported by a mechanical support that is fixed to the block on which the tool holder is mounted, block which is sliding along the axis of the lathe.

The fiber length was 10 mm. Representative sets of the fibers have been tested, the results can be found in Table I.

**Table I: Dimensions of exemplary masses of metal fibers**

| A | B | C | D | E | F | G | H |
|---|---|---|---|---|---|---|---|
| brass | 14.0 | 3.4 | 19 | 11 | 1.73 | 82.2 | 5.74 |
| FeCralloy | 23.7 | 4.3 | 31 | 19 | 1.63 | 86.2 | 4.98 |
| nickel | 13.8 | 2.3 | 20 | 11 | 1.83 | 77.1 | 5.24 |
| AISI 304 | 21.9 | 5.0 | 28 | 18 | 1.56 | 87.7 | 5.26 |

| | | | | | | | |
|---|---|---|---|---|---|---|---|
| A: material B: average equivalent fiber diameter (µm) C: standard deviation between fibers of the equivalent fiber diameter (µm) D: maximum bisector (µm) E: minimum bisector (µm) F: ratio maximum bisector over minimum bisector G: percentage of fibers (percentage by numbers of fibers) with a ratio maximum bisector over minimum bisector lower than 2. H: equivalent diameter multiplied by the circumference of the fiber cross section and divided by the surface area of the fiber cross section. | | | | | | | |

The fibers of the examples are tapered: as they are machined from cylindrical work piece by means of a tool, and the fibers are cut along the radius of the cylindrical work piece, a small difference exists in cross sectional area between one end and the other end of each fiber. The amount of taper depends on the fiber length of the fibers that are cut and on the diameter of the work piece (ingot) from which the fibers are cut. Examples of taper as measured is (for FeCrAlloy fibers of 10 mm length):
- at a work piece diameter of 180 mm, equivalent diameter at the two ends of the fiber 21.7 µm and 20.4 µm.
- at a work piece diameter of 78 mm, equivalent diameter at the two ends of the fiber 22.3 µm and 19.2 µm.

## Claims

1. A mass of metal fibers, wherein the metal fibers of the mass of metal fibers
- have a discrete length;
- have a cross section, wherein the cross section has two neighbouring straight lined sides with an included angle of less than 90° and one or more irregularly shaped curved sides,
- have an average equivalent diameter of less than 100 µm; and
- have a standard deviation between fibers of the equivalent fiber diameter of less than 25% of the equivalent fiber diameter.

2. A mass of metal fibers as in claim 1, wherein the metal fibers are tapered along the length of the fiber.

3. A mass of metal fibers as in any of the preceding claims, wherein the average of the multiplication of the equivalent diameter with the ratio of the circumference of the cross section to the cross sectional area of the metal fibers is lower than 6.

4. A mass of metal fibers as in any of the preceding claims, wherein the ratio of the average of the maximum bisector to the average of the minimum bisector of the metal fibers is smaller than 2.5.

5. A mass of metal fibers as in any of the preceding claims, wherein at least 80% of the metal fibers have a ratio of the maximum bisector to the minimum bisector of less than 2.

6. A mass of metal fibers as in claims 1 to 5, wherein the metal fibers are of a ferrous or of a non-ferrous metal or alloy.

7. A nonwoven web, comprising at least one layer of a mass of metal fibers as described in claims 1 to 6.

8. A nonwoven web made of a mass of metal fibers as described in any one of the claims 1 to 6.

9. Use of the nonwoven web as in claims 7 to 8 in filtration, or as electrodes or as support for catalysts, or as catalysts, or as contact layer or as gas diffusion layer in electrochemical cells.

10. Filter or electrode or catalyst or support for catalysts or contact layer in an electrochemical cell or gas diffusion layer in an electrochemical cell, comprising a nonwoven web as in claims 7 to 8.

## Patentansprüche

1. Metallfasermasse, wobei die Metallfasern der Metallfasermasse
- eine diskrete Länge aufweisen;
- einen Querschnitt aufweisen, wobei der Querschnitt zwei benachbarte geradlinige Seiten, deren eingeschlossener Winkel kleiner als 90° ist, und eine oder mehrere unregelmäßig geformte gekrümmte Seiten aufweist;
- einen durchschnittlichen Äquivalenzdurchmesser von weniger als 100 µm aufweisen; und
- eine Standardabweichung zwischen Fasern mit dem Äquivalenzdurchmesser von weniger als 25 % des Äquivalenzfaserdurchmessers aufweisen.

2. Metallfasermasse nach Anspruch 1, wobei die Metallfasern sich entlang der Länge der Fasern verjüngen.

3. Metallfasermasse nach einem der vorhergehenden Ansprüche, wobei der Durchschnitt der Multiplikation des Äquivalenzdurchmessers mit dem Verhältnis des Querschnittumfangs zu der Querschnittfläche der Metallfasern kleiner als 6 ist.

4. Metallfasermasse nach einem der vorhergehenden Ansprüche, wobei das Verhältnis des Durchschnitts der maximalen Halbierenden zu dem Durchschnitt der minimalen Halbierenden der Metallfasern kleiner als 2,5 ist.

5. Metallfasermasse nach einem der vorhergehenden Ansprüche, wobei mindestens 80 % der Metallfasern ein Verhältnis der maximalen Halbierenden zu der minimalen Halbierenden der Metallfasern kleiner als 2 aufweisen.

6. Metallfasermasse nach den Ansprüchen 1 bis 5, wobei die Metallfasern aus einem Eisenmetall oder einer Eisenlegierung oder aus einem Nichteisenmetall oder einer Nichteisenlegierung sind.

7. Vliesbahn, die mindestens eine Schicht aus einer Metallfasermasse wie in den Ansprüchen 1 bis 6 beschrieben umfasst.

8. Vliesbahn, die aus einer Metallfasermasse wie in einem der Ansprüche 1 bis 6 beschrieben hergestellt ist.

9. Verwendung der Vliesbahn nach den Ansprüchen 7 bis 8 in der Filtration oder als Elektroden oder als Träger für Katalysatoren oder als Katalysatoren oder als Kontaktschicht oder als Gasdiffusionsschicht in elektrochemischen Zellen.

10. Filter oder Elektrode oder Katalysator oder Träger für Katalysatoren oder Kontaktschicht in einer elektrochemischen Zelle oder Gasdiffusionsschicht in einer elektrochemischen Zelle, umfassend eine Vliesbahn nach den Ansprüchen 7 bis 8.

## Revendications

1. Masse de fibres métalliques, les fibres métalliques de la masse de fibres métalliques
- ayant une longueur discrète ;
- ayant une section transversale, la section transversale ayant deux côtés rectilignes voisins avec un angle au sommet de moins de 90° et un ou plusieurs côtés incurvés de forme irrégulière ;
- ayant un diamètre équivalent moyen de moins de 100 µm ; et
- ayant un écart type entre fibres du diamètre équivalent de fibre de moins de 25 % du diamètre équivalent de fibre.

2. Masse de fibres métalliques selon la revendication 1, dans laquelle les fibres métalliques sont effilées le long de la longueur de la fibre.

3. Masse de fibres métalliques selon l'une quelconque des revendications précédentes, dans laquelle la moyenne de la multiplication du diamètre équivalent par le rapport entre la circonférence de la section transversale et la surface de section transversale des fibres métalliques est inférieure à 6.

4. Masse de fibres métalliques selon l'une quelconque des revendications précédentes, dans laquelle le rapport entre la moyenne de la bissectrice maximale et la moyenne de la bissectrice minimale des fibres métalliques est inférieur à 2,5.

5. Masse de fibres métalliques selon l'une quelconque des revendications précédentes, dans laquelle au moins 80 % des fibres métalliques ont un rapport entre la bissectrice maximale et la bissectrice minimale de moins de 2.

6. Masse de fibres métalliques selon l'une quelconque des revendications 1 à 5, dans laquelle les fibres métalliques sont en métal ou alliage ferreux ou non ferreux.

7. Bande de non-tissé, comprenant au moins une couche d'une masse de fibres métalliques telle que décrite dans les revendications 1 à 6.

8. Bande de non-tissé constituée d'une masse de fibres métalliques telle que décrite dans l'une quelconque des revendications 1 à 6.

9. Utilisation de la bande de non-tissé selon les revendications 7 à 8 en filtration, ou comme électrodes ou comme support pour catalyseurs, ou comme catalyseurs, ou comme couche de contact ou comme couche de diffusion gazeuse dans des cellules électrochimiques.

10. Filtre ou électrode ou catalyseur ou support pour catalyseurs ou couche de contact dans une cellule électrochimique ou couche de diffusion gazeuse dans une cellule électrochimique, comprenant une bande de non-tissé selon les revendications 7 à 8.
